# FASCICULE DE BREVET EUROPEEN

(11) **EP 3 077 131 B1**
(45) Date de publication et mention de la délivrance du brevet: **25.09.2019**
(21) Numéro de dépôt: 14812420.9
(22) Date de dépôt: 03.12.2014
(51) Int. Cl.: B09C 1/02, B09C 1/08, A61K 47/12, C11D 3/04, G21F 9/00

(54) **COMBINAISON DE RÉACTIFS ET PROCÉDÉ DE DÉPOLLUTION DES SOLS POLLUÉS EN UTILISANT LADITE COMBINAISON**
KOMBINATION VON REAGENZMITTELN UND VERFAHREN ZUM ENTFERNEN VON VERUNREINIGUNGEN AUS BÖDEN UNTER VERWENDUNG DIESER KOMBINATION
COMBINATION OF REAGENTS AND METHOD FOR REMOVING POLLUTION FROM POLLUTED SOILS USING THE SAME

(30) Priorité: 04.12.2013 LU 92324
(43) Date de publication de la demande: 12.10.2016
(73) Titulaire: De Loës, Pierre, 1201 Geneve (CH)
(72) Inventeur: STENGEL, Patrice, F-06800 Cagnes-sur-Mer (FR)
(74) Mandataire: Office Freylinger
(86) Numéro de dépôt international: PCT/EP2014/076450
(87) Numéro de publication internationale: WO 2015/082558

(56) Documents cités:
- EP-A1- 0 550 221
- EP-A1- 2 008 976
- US-A1- 2012 129 345
- LU N ET AL: "REMOVAL OF PLUTONIUM-239 AND AMERICIUM-241 FROM ROCKY FLATS SOIL BY LEACHING", ENVIRONMENTAL SCIENCE & TECHNOLOGY, AMERICAN CHEMICAL SOCIETY, US, vol. 32, no. 3, 1 février 1998 (1998-02-01), pages 370-374, XP000774102, ISSN: 0013-936X, DOI: 10.1021/ES970329T

## Description

### Domaine technique

La présente invention concerne un procédé de dépollution des sols pollués par des métaux et des nucléides radioactifs.

### Etat de la technique

L'activité humaine est à l'origine de la production de composés polluants. En particulier, tous les types d'industrie (textile, chimique, agroalimentaire, pharmaceutique, métallurgique, automobile etc..), l'agriculture ainsi que la production d'énergie nucléaire sont responsables de la pollution des sols. Cette pollution des sols est mesurable dans tous les territoires où une exploitation industrielle a été mise en oeuvre.

La pollution des sols concerne donc de nombreux territoires et leur dépollution représentent un véritable enjeu écologique mais également économique.

En particulier, la dépollution des sols contaminés par les déchets radioactifs est devenue prioritaire. En effet, bien que décriée l'énergie nucléaire est toujours très utilisée pour la production d'électricité. En outre, l'utilisation de l'énergie nucléaire permet d'éviter la consommation de sources d'énergie fossile et de ce fait permet de réduire la production de gaz à effet de serre dans l'atmosphère.

Cependant, l'utilisation de l'énergie nucléaire engendre la production de déchets susceptibles de contaminer durablement les sols. En particulier, il a été observé l'existence de stockages non-autorisés ou abandonnés de déchets nucléaires. De surcroît, la question de la pollution des sols par des déchets radioactifs s'impose également dans le cas des accidents survenant dans les centrales nucléaires. Un des accidents les plus connus concerne la centrale nucléaire de Tchernobyl en 1986. Cette catastrophe a entraîné la contamination des sols sur un large territoire autour de la centrale nucléaire. De nos jours, ces territoires restent encore interdits d'accès. Plus récemment, l'accident survenu à la centrale nucléaire de Fukushima a également causé une contamination élevée des sols environnants. Ce type de pollution empêche toute exploitation des sols que ce soit pour l'agriculture, l'industrie ou pour l'habitation.

L'augmentation de l'industrialisation ainsi que l'utilisation de l'énergie nucléaire nécessitent de mettre au point des procédés efficaces de dépollution des sols.

Des procédés de dépollution ont été développés dans ce but, par exemple : le procédé de vitrification ou le procédé de complexation. Ces procédés présentent néanmoins les inconvénients d'être chers et difficiles à mettre en oeuvre. De plus, bien que piégés, les déchets indésirables restent présents dans le sol en combinaison avec les composés nécessaires pour leur complexation. A l'issue de ces traitements, ces sols ne pourront donc pas être réutilisés (par exemple pour de l'agriculture, l'industrie ou l'habitation).

L'article de N. Lu et al.,: "Removal of plutonium-239 and Americium-241 from rocky flats soil by leaching", Environmental Science & Technology, vol. 32, no. 3, 1998, pages 370-374, décrit un procédé de décontamination par lixiviation qui se base sur l'utilisation d'une solution contenant entre autre du citrate en combinaison avec un agent réducteur tel que l'acide ascorbique ou le dithionite. Cette combinaison de réactifs a pour but de décontaminer les sols pollués avec des éléments radioactifs, en particulier le plutonium-239 et l'américium-241. Les résultats montrent que la combinaison de réactifs élimine au moins 70% de contaminants actifs des sols et l'efficacité varie en fonction de l'association des éléments radioactifs avec la taille des particules du sol.

Il existe donc une véritable nécessité de mettre au point un procédé de dépollution des sols permettant idéalement de décontaminer les déchets nucléaires et/ou les déchets issus de l'industrie (tels que les métaux lourds) qui soit efficace et pratique à mettre en oeuvre.

### Objet de l'invention

Un objet de la présente invention est donc de fournir une combinaison de réactifs et un procédé de dépollution utilisant cette combinaison de réactifs efficace des sols pollués par des métaux et/ou des nucléides radioactifs pratique à mettre en oeuvre et peu onéreux.

Conformément à l'invention, cet objectif est atteint par une combinaison de réactifs selon la revendication 1 et un procédé de dépollution selon la revendication 3.

### Description générale de l'invention

La présente invention, comme défini dans la revendication 1, concerne une combinaison de réactifs consistant en de l'acide citrique et de l'acide ascorbique à l'exclusion de tout autre composé. La combinaison de réactifs consiste en environ de 80 à 90% en poids d'acide citrique et en environ de 10 à 20% en poids d'acide ascorbique par rapport au poids total de la combinaison de réactifs, de préférence environ 85% en poids d'acide citrique et environ 15% en poids d'acide ascorbique par rapport au poids total de la combinaison de réactifs.

La présente invention, comme défini dans la revendication 3, propose également un procédé de dépollution des sols pollués par des métaux et/ou des nucléides radioactifs comprenant les étapes de :
- a) excavation et prélèvement du sol pollué,
- b) mélange du sol pollué avec de l'eau (industrielle) de traitement comprenant une combinaison de réactifs consistant en un mélange d'acide citrique et de d'acide ascorbique, à l'exclusion de tout autre composé, de préférence dans les proportions d'environ 80 à 90% en poids d'acide citrique (C₆H₈O₇) et d'environ 10% à 20% en poids d'acide ascorbique (C₆H₈O₆) par rapport au poids total de la combinaison de réactifs,
- c) brassage du mélange obtenu,
- d) séparation du sol dépollué et de l'eau (industrielle) de traitement chargée de complexes d'acide (acide citrique et acide ascorbique) et de métaux et/ou de nucléides radioactifs par évacuation de l'eau (industrielle) de traitement en brassage et pompage permanents, de préférence jusqu'à un bac de stockage sécurisé,
- e) rinçage du sol dépollué en le mélangeant avec de l'eau (industrielle) de rinçage et en évacuant l'eau (industrielle) de rinçage, de préférence jusqu'au bac de stockage sécurisé,
- f) évacuation du sol dépollué et réutilisable.

Le terme « métaux » comprend tous les types de métaux et en particulier les «métaux dits lourds » ou « éléments-traces métalliques (ETM) ». On peut en particulier citer le cadmium, le plomb, le zinc, le cuivre, le fer, le mercure, le chrome, l'or, l'argent, le titane, le nickel mais également l'antimoine, l'arsenic, le sélénium, le tellure, le thallium et l'étain.

Le terme « nucléides radioactifs » concerne des nucléides instables encore appelés radionucléides. Il peut s'agir en particulier de l'uranium, du thorium, du plutonium, du cobalt, du cæsium ou du strontium.

Le terme « combinaison de réactifs » (ou mélange de réactifs) concerne un mélange d'acide citrique (acide *alpha* hydroxylé de formule C₆H₈O₇) et d'acide ascorbique (C₆H₈O₆) ou leurs sels. La combinaison de réactifs ne comprend aucun autre composé. La combinaison de réactifs consiste en environ de 80 à 90% en poids d'acide citrique et environ de 10 à 20% en poids d'acide ascorbique par rapport au poids total de la combinaison de réactifs. Un dosage idéal de la combinaison de réactifs consiste en environ 85% en poids d'acide citrique et environ 15% en poids d'acide ascorbique par rapport au poids total de la combinaison de réactifs.

Le terme « eau (industrielle) de traitement » désigne l'eau (industrielle) comprenant la combinaison de réactifs comprenant (ou consistant en) de l'acide citrique et de l'acide ascorbique.

Le terme « eau (industrielle) de rinçage » désigne de l'eau (industrielle) non polluée et ne comprenant pas de combinaison de réactifs (avant son utilisation pour le rinçage du sol).

Le terme «complexe d'acide et de métaux et/ou de nucléides radioactifs » (ou complexe composé de citrates et de métaux et/ou de nucléides radioactifs) désigne les complexes formés entre l'acide citrique et l'acide ascorbique avec les métaux et/ou les nucléides radioactifs. L'acide citrique et l'acide ascorbique sont en fait agglomérés sur les métaux et/ou de nucléides radioactifs de façon à former des complexes. L'acide citrique, également connu sous le nom d'acide 2-hydroxypropane-1,2,3 tricarboxylique, est de formule C₆H₈O₇. L'acide ascorbique, connu sous le nom de 2-(1,2-dihydroxyéthyl)-4,5-dihydroxyfuran-3-one, est de formule C₆H₈O₆.

Le procédé selon la présente invention présente l'avantage de dépolluer entièrement les sols pollués a température ambiante (par exemple entre 15°C et 25°C) et de permettre ainsi leur réutilisation par exemple pour l'agriculture, l'industrie ou le logement. En effet, ce procédé de dépollution est non-agressif car effectué en utilisant combinaison de réactifs non polluante. De surcroît, à l'issue du procédé de dépollution, la combinaison de réactifs ainsi que les composés polluants (nucléides radioactifs et/ou les métaux) ne sont plus présents dans le sol contrairement à d'autres éléments chimiques utilisés pour la dépollution des sols. Ce procédé ne produit donc pas de déchets dits secondaires. Cette combinaison de réactifs permet d'effectuer une chélation efficace des métaux et/ou des nucléides radioactifs conduisant à la formation de complexes (composé de citrates). Ces complexes peuvent alors être aisément séparés des sols à dépolluer. L'étape de rinçage intervenant après la séparation du sol pollué et des complexes d'acide et des métaux et/ou nucléides radioactifs permet une élimination totale des éventuelles traces de complexes résiduels et/ou de la combinaison de réactifs qui pourraient subsister.

De plus, le procédé selon l'invention présente également l'avantage de permettre la récupération des métaux et/ou des nucléides radioactifs extraits des sols dépollués pour une éventuelle réutilisation.

Ce procédé peut être utilisé à proximité du site à dépolluer car il ne nécessite pas des installations complexes.

Avantageusement, le procédé de dépollution peut comprendre une étape de traitement de l'eau industrielle utilisée. Cette étape permet de purifier l'eau industrielle (de traitement et de rinçage) qui a été utilisée pour dépolluer le sol. A l'issue de cette étape, l'eau industrielle peut être recyclée pour être réutilisée dans le procédé.

Dans le cas du traitement des métaux, les complexes d'acide et de métaux sont séparés par électrocoagulation ou par nano-filtration. L'électrocoagulation consiste à faire passer un courant électrique à travers l'eau à traiter. Généralement, on utilise une anode qui peut être en aluminium et qui en se décomposant produit un coagulant. Le courant électrique a pour effet de rompre toutes les liaisons chimiques des métaux complexés. Ainsi, les liaisons entre la combinaison de réactifs (acide citrique et acide ascorbique) et les métaux sont rompues sous l'action du courant électrique. La nano-filtration est un procédé de séparation qui est effectué par l'application d'une pression qui en est la force motrice. La nano-filtration implique l'utilisation de membranes semi-perméables.

Dans le cas du traitement des nucléides radioactifs, les complexes d'acide et de nucléides radioactifs sont séparés par l'exposition aux rayons ultraviolets (UV).

Une fois séparés des complexes, les métaux et/ou les nucléides radioactifs sont également isolés de l'eau industrielle. De surcroît, les métaux et/ou les nucléides radioactifs peuvent être facilement récupérés et valorisés si nécessaire.

En particulier, les nucléides radioactifs pourront être soumis à une étape de retraitement supplémentaire dans un centre spécialisé pour les déchets nucléaires.

Dans le cas des métaux, ils pourront en outre être réutilisés pour d'autres applications (par exemple dans l'industrie du ciment).

Avantageusement, l'eau industrielle de traitement utilisée à l'étape b) et l'eau industrielle de rinçage de l'étape e), qui sont de préférence stockées dans un bac de stockage sécurisé, sont recyclées de façon à être réutilisée dans le procédé de dépollution. De ce fait, le procédé de dépollution nécessite uniquement, pour être mis en oeuvre, des installations en circuit fermé. Ainsi, le procédé peut être mis en oeuvre à proximité du site à dépolluer.

De façon préférée, la combinaison de réactifs utilisée dans le procédé consiste en un mélange d'acide citrique et d'acide ascorbique à l'exclusion de tout autre composé, de préférence dans les proportions d'environ 80 à 90% en poids d'acide citrique et d'environ 10 à 20% en poids d'acide ascorbique par rapport au poids total de la combinaison de réactifs. Idéalement, la combinaison de réactifs consiste en environ 85% en poids d'acide citrique et environ 15% en poids d'acide ascorbique par rapport au poids total de la combinaison de réactifs.

Selon un mode de réalisation de l'invention, la concentration de la combinaison de réactifs (acide ascorbique et acide citrique) comprise dans l'eau industrielle de traitement au moment du mélange b) est comprise entre 1 Kg/m³ et 6Kg/m³ et de façon préférée entre 1Kg/m³ et 3 Kg/m³.

Avantageusement, l'étape de mélange b) de l'eau industrielle de traitement comprenant la combinaison de réactifs (acide citrique et acide ascorbique) avec le sol à dépolluer s'effectue à température ambiante et le pH de l'eau industrielle de traitement avant l'étape de mélange b) est de préférence compris entre 4 et 8.

Le mélange de l'étape b) permet d'assurer une bonne activité de chélation de la combinaison de réactifs avec les métaux et/ou les nucléides radioactifs.

De préférence, le brassage de l'étape c) est permanent (continu) de façon à permettre une bonne activité de séparation des complexes d'acide et des métaux et/ou des nucléides radioactifs de l'eau industrielle de traitement.

Avantageusement, l'eau industrielle de traitement est évacuée de préférence vers un bac de stockage sécurisé à l'issue de l'étape d) à l'aide d'une pompe d'évacuation.

De préférence, l'eau industrielle de rinçage à l'issue de l'étape e) est évacué jusqu'à un bac de stockage sécurisé par un égouttoir ou un tamis rotatif.

L'invention concerne également une composition aqueuse acide comprenant ladite combinaison de réactifs et de l'eau à l'exclusion de tout autre composé.

L'invention se réfère également à l'utilisation de la combinaison de réactifs ou la composition aqueuse acide pour la dépollution des sols.

Tous les modes de réalisations précédemment mentionnés peuvent être combinés dans la mesure du raisonnable.

### Brève description des dessins

D'autres particularités et caractéristiques de l'invention ressortiront de la description détaillée de quelques modes de réalisation avantageux présentés ci-dessous, à titre d'illustration, en se référant aux dessins annexés. Ceux-ci montrent:

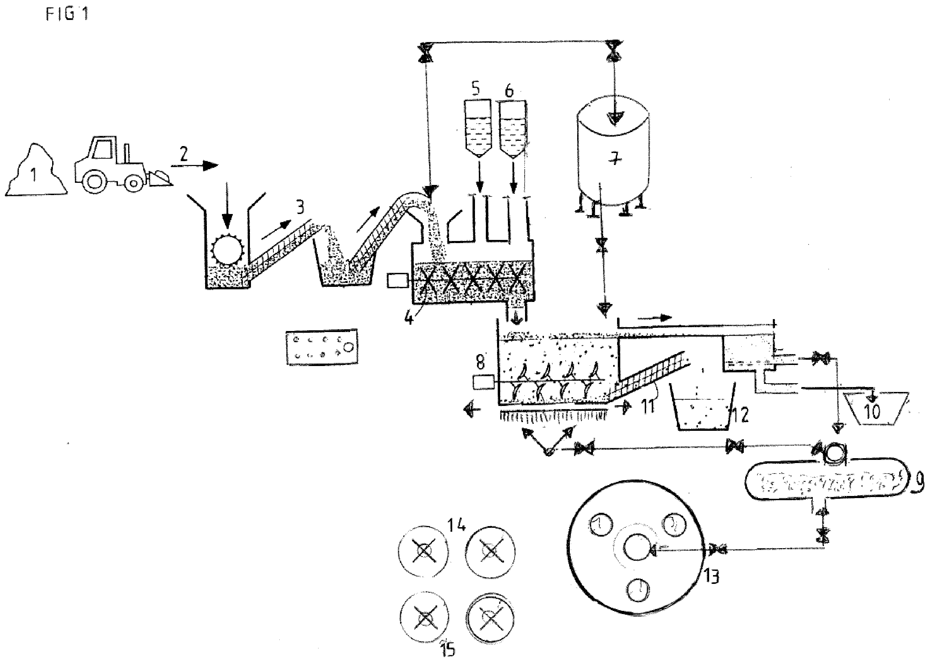

- Fig. 1: est un schéma représentant la mise en oeuvre du procédé selon l'invention.

### Description d'une exécution préférée

Le procédé selon l'invention comprend les étapes suivantes :
- a) excavation et prélèvement du sol pollué,
- b) mélange du sol pollué avec de l'eau industrielle de traitement comprenant une combinaison de réactifs consistant en un mélange d'acide citrique et de d'acide ascorbique, à l'exclusion de tout autre composé, de préférence dans les proportions de 80 à 90% en poids d'acide citrique et de 10 à 20% en poids d'acide ascorbique par rapport au poids total de la combinaison de réactifs,
- c) brassage du mélange obtenu,
- d) séparation du sol dépollué et de l'eau industrielle de traitement chargée de complexes d'acide et de métaux et/ou de nucléides radioactifs par évacuation de l'eau industrielle de traitement en brassage et pompage permanent de préférence jusqu'à un bac de stockage sécurisé,
- e) rinçage du sol dépollué en mélangeant avec de l'eau industrielle de rinçage et en évacuant l'eau industrielle de rinçage de préférence jusqu'à un bac de stockage sécurisé,
- f) évacuation du sol dépollué et réutilisable.

La figure 1 décrit un mode de réalisation possible de l'invention. Le sol pollué 1 est excavé et prélevé du site à dépolluer en utilisant une pelle mécanique 2. Le sol prélevé est ensuite transporté à l'aide d'une bande de transport capotée 3 et introduit dans un mélangeur à socs de charrue 4 qui est de préférence équipé d'une guillotine pneumatique de vidange.

Les deux composantes de la combinaison de réactifs, à savoir l'acide citrique et l'acide ascorbique, se trouvent sous forme anhydre dans deux bacs de dosage 5 et 6 munis de pompes de dosage qui seront injectés directement dans le mélangeur 4. Le bac de stockage d'eau industrielle 7 injectera la quantité d'eau nécessaire au mélange. Ce bac de stockage d'eau industrielle 7 communique avec le mélangeur à socs de charrue 4 de façon à ce que la combinaison de réactifs puisse être diluée directement dans le mélangeur à socs de charrue 4. Les réactifs seront déversés de préférence en proportion d'environ 85% en poids pour l'acide citrique et d'environ 15% en poids pour l'acide ascorbique par rapport au poids total de la combinaison de réactifs dans le mélangeur à socs de charrue 4.

L'eau industrielle stockée dans un bac de stockage d'eau industrielle 7 est ajoutée dans le mélangeur à socs de charrue 4 en quantité de 30 à 40 litres/m³.

Le mélange contenu dans le mélangeur à socs de charrue 4 comprenant le sol pollué, l'eau industrielle de traitement comprenant la combinaison de réactifs, est brassé énergiquement de sorte à obtenir une masse bien homogène. La durée du mélange est adaptée en fonction de la quantité de sol pollué, de la combinaison de réactifs et d'eau industrielle à mélanger. Lors de cette étape, la combinaison de réactifs va jouer le rôle de chélateur et former des complexes avec les nucléides radioactifs et/ou les métaux (encore appelés composés de citrates). Grâce à la formation de ces complexes, les nucléides et/ou les métaux pourront facilement être séparés du sol.

Le mélange homogène obtenu est ensuite transféré du mélangeur à socs de charrue 4 par la guillotine pneumatique de vidange vers un autre bac muni d'un système de brassage de type socs de charrue 8 qui brassera en permanence le mélange dans le but d'assurer une bonne séparation entre le sol à dépolluer et l'eau industrielle de traitement chargée de complexes. Le bac muni d'un système de brassage de type socs de charrue 8 peut de préférence être étanche et à ciel ouvert, à savoir la partie supérieure du bac est ouverte. L'eau industrielle de traitement chargée de complexes d'acide et de métaux et/ou de nucléides radioactifs est ensuite évacuée du bac muni de socs de charrue 8 par une pompe à membranes et acheminée vers un bac de stockage sécurisé de l'eau industrielle 9. Le brassage permanent permet notamment d'assurer l'évacuation simultanée de l'eau industrielle de traitement et les complexes d'acide et de métaux et/ou de nucléides radioactifs. Les complexes d'acide et de métaux et/ou de nucléides radioactifs sont entraînés avec l'eau industrielle et de ce fait, extraits du sol. L'eau industrielle de traitement chargée de complexes d'acide et de métaux et/ou de nucléides radioactifs est acheminée vers un autre bac de stockage sécurisé de l'eau industrielle 9 pour être dépolluée. Les particules résiduelles éventuelles de sol qui seront emportés par ce transfert seront retenues sur un tamis et déversées dans un bac prévu à cet effet, à savoir un bac de stockage de particules résiduelles de sol 10.

Le sol dépollué est ensuite soumis à une étape de rinçage dans le bac muni d'un système de brassage de type socs à charrue 8. Cette étape de rinçage est effectuée en utilisant de l'eau industrielle uniquement provenant du bac de stockage de l'eau industrielle 7. Cette fois-ci, l'eau industrielle est évacuée par le fond du bac muni d'un système de brassage de type socs à charrue 8 de préférence par une trappe d'égouttage à perforations fines qui sera en mouvement continue de façon à garantir une évacuation maximale de l'eau. L'eau industrielle de rinçage sera stockée dans un bac de stockage sécurisé de l'eau industrielle 9. Cette eau pourra être réutilisée après traitement dans le procédé.

Ensuite, le sol dépollué contenu dans le bac muni d'un système de brassage de type socs à charrue 8 est ensuite évacué à l'aide d'une vis sans fin ou une bande de transport 11 vers un autre bac de stockage du sol dépollué 12. Le sol dépollué à l'issue du procédé peut éventuellement être soumis à des analyses supplémentaires en laboratoire pour vérifier sa composition avant sa réutilisation.

L'eau industrielle qui est contenue dans le bac de stockage sécurisé de l'eau industrielle 9 est également soumise à une étape de dépollution.

En effet, pour séparer les métaux des complexes formés avec la combinaison de réactifs, l'eau industrielle est soumise à une étape d'éléctrocoagulation et/ou de nano-filtration. L'utilisation de l'éléctrocoagulation et/ou nano-filtration est particulièrement adaptée si les volumes d'eau à traiter ne dépassent pas les 15m³. Si cela est souhaité, les métaux issus de la séparation des complexes pourront être récupérés dans des fûts pour métaux 14 et valorisés voire recyclés si possible. Le traitement de l'eau industrielle est assuré par un module de traitement 13.

Dans ce module de traitement 13, l'eau industrielle pourra être soumise à une exposition à des rayons UV. L'exposition aux rayons UV permet en particulier de séparer les complexes formés par l'acide (acide citrique et acide ascorbique) et les nucléides radioactifs. Le rayonnement UV permet de briser les liaisons acides entre l'acide et les nucléides radioactifs. En particulier, les nucléides radioactifs sont séparés sous une forme concentrée et ils sont stockés dans des fûts adaptés a cet usage 15 Ces fûts de stockage pour nucléides radioactifs 15 sont ensuite transférés vers des centres de retraitement spécialisés.

L'eau industrielle après avoir été entièrement dépolluée par l'étape d'éléctro-coagulation et/ou nano-filtration et par l'étape d'exposition aux rayons UV est stockée dans le bac 7 et peut à nouveau être pompée et réutilisée dans le procédé. L'eau industrielle de traitement et l'eau industrielle de rinçage sont facilement recyclables dans le procédé selon l'invention.

De préférence, les opérateurs du procédé doivent être soumis à certaines mesures de sécurité pour pouvoir mettre en oeuvre le procédé. Notamment, les opérateurs doivent être équipés de la façon suivante :
- fourniture d'un manuel HSE comprenant les fiches incidents,
- port d'une combinaison de protection,
- port du casque et des chaussures de sécurité,
- port de lunettes de sécurité et d'un masque contre les éclaboussures,
- port de gants résistants à toute dégradation chimique et
- compteurs Geiger ou autres appareils de détections pour détecter des radiations éventuelles.

### Légende:

- 1: sol pollué
- 2: pelle mécanique
- 3: bande de transport capotée
- 4: mélangeur à socs de charrue
- 5+6: bac de dosage des composantes de la combinaison de réactifs
- 7: bac de stockage de l'eau industrielle
- 8: bac muni d'un système de brassage de type socs de charrue
- 9: bac de stockage sécurisé de l'eau industrielle
- 10: bac de stockage de particules résiduelles de sol
- 11: vis sans fin ou une bande de transport
- 12: bac de stockage du sol dépollué
- 13: module de traitement de l'eau industrielle
- 14: fût de stockage pour les métaux
- 15: fût de stockage pour les nucléides radioactifs

## Revendications

1. Combinaison de réactifs **caractérisée en ce qu'**elle consiste en un mélange d'acide citrique et de d'acide ascorbique, à l'exclusion de tout autre composé, de préférence dans les proportions d'environ 80 à 90% en poids d'acide citrique et d'environ 10% à 20% en poids d'acide ascorbique par rapport au poids total de la combinaison de réactifs et idéalement environ 85% en poids d'acide citrique et environ 15% en poids d'acide ascorbique par rapport au poids total de la combinaison de réactifs.

2. Utilisation d'une combinaison de réactifs selon la revendication 1 pour la dépollution des sols.

3. Procédé de dépollution des sols pollués par des métaux et/ou des nucléides radioactifs comprenant les étapes de :
- a) excavation et prélèvement du sol pollué,
- b) mélange du sol pollué avec de l'eau industrielle de traitement comprenant une combinaison de réactifs selon la revendication 1,
- c) brassage du mélange obtenu,
- d) séparation du sol dépollué et de l'eau industrielle de traitement chargée de complexes d'acide et de métaux et/ou de nucléides radioactifs par évacuation l'eau industrielle de traitement en brassage et pompage permanents, de préférence jusqu'à un bac de stockage sécurisé,
- e) rinçage du sol dépollué en le mélangeant avec de l'eau industrielle de rinçage et en évacuant l'eau industrielle de rinçage, de préférence jusqu'à un bac de stockage sécurisé,
- f) évacuation du sol dépollué et réutilisable.

4. Procédé de dépollution des sols pollués selon la revendication 3 comprenant en outre une étape de traitement de l'eau industrielle utilisée.

5. Procédé de dépollution des sols pollués selon la revendication 4 **caractérisé en ce que** les métaux sont séparés des complexes par électrocoagulation ou par nano-filtration.

6. Procédé de dépollution des sols pollués selon la revendication 4 **caractérisé en ce que** les nucléides radioactifs sont séparés des complexes par exposition aux rayons ultraviolets.

7. Procédé de dépollution des sols pollués selon la revendication 5 ou 6 **caractérisé en ce que** les métaux et/ou les nucléides radioactifs sont séparés de l'eau industrielle utilisée.

8. Procédé de dépollution des sols pollués selon l'une quelconque des revendications 3 à 7 **caractérisé en ce que** l'eau industrielle de traitement est évacuée vers le bac de stockage sécurisé à l'issue de l'étape d) à l'aide d'une pompe d'évacuation.

9. Procédé de dépollution des sols pollués selon l'une quelconque des revendications 3 à 8 **caractérisé en ce que** l'eau industrielle de rinçage est évacuée vers le bac de stockage sécurisé à l'issue de l'étape e) par un égouttoir ou un tamis rotatif.

10. Procédé de dépollution selon l'une quelconque des revendications 3 à 9 **caractérisé en ce qu'** à l'issue du traitement, l'eau industrielle de traitement ainsi que l'eau industrielle de rinçage stockées dans le bac de stockage sécurisé sont recyclées pour être à nouveau utilisées dans le procédé.

11. Procédé selon l'une quelconque des revendications 3 à 10 **caractérisé en ce que** la combinaison de réactifs consiste en de l'acide citrique et de l'acide ascorbique à l'exclusion de tout autre composé.

12. Procédé selon l'une quelconque des revendications 3 à 11 **caractérisé en ce que** la combinaison de réactifs consiste en environ de 80 à 90% d'acide citrique et en environ de 10 à 20% d'acide ascorbique en poids par rapport au poids total de la combinaison de réactifs et de préférence en environ 85% poids d'acide citrique et en environ 15% en poids d'acide ascorbique par rapport au poids total de la combinaison de réactifs.

13. Procédé de dépollution selon l'une quelconque des revendications 3 à 12 **caractérisé en ce que** la concentration de la combinaison de réactifs dans l'eau industrielle de traitement est de 1kg/m³ à 6kg/m³ et de préférence de 1kg/m³ à 3kg/m³.

14. Procédé de dépollution selon l'une quelconque des revendications 3 à 13 **caractérisé en ce que** le pH de l'eau industrielle de traitement est compris entre 4 et 8 avant l'étape de mélange b).

15. Procédé selon l'une quelconque des revendications 3 à 14 **caractérisé en ce que** l'étape de mélange b) s'effectue à une température ambiante.

## Patentansprüche

1. Kombination von Reagenzien, **dadurch gekennzeichnet, dass** sie aus einer Mischung von Citronensäure und von Ascorbinsäure besteht, wobei keinerlei andere Verbindungen enthalten sind, vorzugsweise in Anteilen von ungefähr 80 % bis 90 % nach Gewicht an Citronensäure und von ungefähr 10 % bis 20 % nach Gewicht an Ascorbinsäure, bezogen auf das Gesamtgewicht der Kombination von Reagenzien, und idealerweise ungefähr 85 Gewichts-% an Citronensäure und ungefähr 15 Gewichts-% an Ascorbinsäure, bezogen auf das Gesamtgewicht der Kombination von Reagenzien.

2. Verwendung einer Kombination von Reagenzien nach Anspruch 1, um Böden zu sanieren.

3. Verfahren zum Sanieren von Böden, die mit Metallen und/oder radioaktiven Nukliden verunreinigt sind, wobei es die folgenden Schritte umfasst:
- a) Ausheben und Entnehmen des verunreinigten Bodens,
- b) Vermischen des verunreinigten Bodens mit industriellem Behandlungswasser, das eine Kombination von Reagenzien nach Anspruch 1 umfasst,
- c) Durchrühren der erhaltenen Mischung,
- d) Trennen des sanierten Bodens und des industriellen Behandlungswassers, welches mit Komplexen aus Säure und aus Metallen und/oder aus radioaktiven Nukliden befrachtet ist, indem das industrielle Behandlungswasser durch fortwährendes Durchrühren und Abpumpen abgeführt wird, bis es vorzugsweise in ein gesichertes Speicherbecken gelangt,
- e) Spülen des sanierten Bodens, indem er mit industriellen Spülwasser vermischt wird und indem das industrielle Spülwasser abgeführt wird, bis es vorzugsweise in ein gesichertes Speicherbecken gelangt,
- f) Abtransportieren des sanierten und wiederverwendbaren Bodens.

4. Verfahren zum Sanieren verunreinigter Böden nach Anspruch 3, wobei es darüber hinaus einen Schritt des Behandelns des verwendeten industriellen Wassers umfasst.

5. Verfahren zum Sanieren verunreinigter Böden nach Anspruch 4, **dadurch gekennzeichnet, dass** die Metalle durch Elektrokoagulation oder durch Nanofiltration von den Komplexen getrennt werden

6. Verfahren zum Sanieren verunreinigter Böden nach Anspruch 4, **dadurch gekennzeichnet, dass** die radioaktiven Nuklide von den Komplexen getrennt werden, indem sie ultravioletter Strahlung ausgesetzt werden.

7. Verfahren zum Sanieren verunreinigter Böden nach Anspruch 5 oder 6, **dadurch gekennzeichnet, dass** die Metalle und/oder die radioaktiven Nuklide von dem verwendeten industriellen Wasser getrennt werden.

8. Verfahren zum Sanieren verunreinigter Böden nach einem beliebigen der Ansprüche 3 bis 7, **dadurch gekennzeichnet, dass** das industrielle Behandlungswasser nach Abschluss des Schrittes d) mittels einer Abführungspumpe in Richtung des gesicherten Speicherbeckens abgeführt wird.

9. Verfahren zum Sanieren verunreinigter Böden nach einem beliebigen der Ansprüche 3 bis 8, **dadurch gekennzeichnet, dass** das industrielle Spülwasser nach Abschluss des Schrittes e) mittels einer Abtropfvorrichtung oder eines sich drehenden Siebes in Richtung des gesicherten Speicherbeckens abgeführt wird.

10. Verfahren zum Sanieren verunreinigter Böden nach einem beliebigen der Ansprüche 3 bis 9, **dadurch gekennzeichnet, dass** das industrielle Behandlungswasser sowie das industrielle Spülwasser, welche in den gesicherten Speicherbecken gespeichert sind, nach Abschluss der Behandlung zurückgeführt werden, um erneut in dem Verfahren verwendet zu werden.

11. Verfahren nach einem beliebigen der Ansprüche 3 bis 10, **dadurch gekennzeichnet, dass** die Kombination von Reagenzien aus Citronensäure und aus Ascorbinsäure besteht, wobei keinerlei andere Verbindungen enthalten sind.

12. Verfahren nach einem beliebigen der Ansprüche 3 bis 11, **dadurch gekennzeichnet, dass** die Kombination von Reagenzien aus ungefähr 80 % bis 90 % an Citronensäure und ungefähr 10 % bis 20 % an Ascorbinsäure nach Gewicht besteht, bezogen auf das Gesamtgewicht der Kombination von Reagenzien, und vorzugsweise aus ungefähr 85 Gewichts-% an Citronensäure und ungefähr 15 Gewichts-% an Ascorbinsäure, bezogen auf das Gesamtgewicht der Kombination von Reagenzien.

13. Sanierungsverfahren nach einem beliebigen der Ansprüche 3 bis 12, **dadurch gekennzeichnet, dass** die Konzentration der Kombination von Reagenzien in den industriellen Behandlungswasser 1 kg/m³ bis 6 kg/m³, und vorzugsweise 1 kg/m³ bis 3 kg/m³, beträgt.

14. Sanierungsverfahren nach einem beliebigen der Ansprüche 3 bis 13, **dadurch gekennzeichnet, dass** der pH-Wert des industriellen Behandlungswassers vor dem Schritt b) des Vermischens im Bereich von 4 bis 8 liegt.

15. Verfahren nach einem beliebigen der Ansprüche 3 bis 14, **dadurch gekennzeichnet, dass** der Schritt b) des Vermischen bei Umgebungstemperatur erfolgt.

## Claims

1. A combination of reagents, **characterised in that** it consists of a mixture of citric acid and ascorbic acid, with the exclusion of any other compound, preferably in the proportions of approximately 80 to 90% by weight citric acid and approximately 10% to 20% by weight ascorbic acid based on the total weight of the combination of reagents, and ideally approximately 85% by weight citric acid and approximately 15% by weight ascorbic acid based on the total weight of the combination of reagents.

2. Use of a combination of reagents according to claim 1 for soil remediation.

3. A remediation method for soil polluted by metals and/or radioactive nuclides comprising the steps of:
- a) excavating and removing the polluted soil,
- b) mixing the polluted soil with industrial treatment water comprising a combination of reagents according to claim 1,
- c) stirring the resultant mixture,
- d) separating the remediated soil and the industrial treatment water laden with complexes of acid and metals and/or radioactive nuclides by discharging the continuously stirred and pumped water, preferably to a secure storage tank,
- e) rinsing the remediated soil by mixing it with industrial rinsing water and by discharging the industrial rinsing water, preferably to a secure storage tank,
- f) discharging the remediated and reusable soil.

4. A remediation method for polluted soil according to claim 3, furthermore comprising a step of treating the used industrial water.

5. A remediation method for polluted soil according to claim 4, **characterised in that** the metals are separated from the complexes by electrocoagulation or by nanofiltration.

6. A remediation method for polluted soil according to claim 4, **characterised in that** the radioactive nuclides are separated from the complexes by exposure to UV radiation.

7. A remediation method for polluted soil according to claim 5 or 6, **characterised in that** the metals and/or the radioactive nuclides are separated from the used industrial water.

8. A remediation method for polluted soil according to any one of claims 3 to 7, **characterised in that** the industrial treatment water is discharged to the secure storage tank on completion of step d) with the assistance of a discharge pump.

9. A remediation method for polluted soil according to any one of claims 3 to 8, **characterised in that** the industrial rinsing water is discharged to the secure storage tank on completion of step e) via a strainer or rotary screen.

10. A remediation method according to any one of claims 3 to 9, **characterised in that**, on completion of treatment, the industrial treatment water together with the industrial rinsing water stored in the secure storage tank are recirculated for reuse in the method.

11. A method according to any one of claims 3 to 10, **characterised in that** the combination of reagents consists of citric acid and ascorbic acid with the exclusion of any other compound.

12. A method according to any one of claims 3 to 11, **characterised in that** the combination of reagents consists of approximately 80 to 90% citric acid and approximately 10 to 20% ascorbic acid by weight based on the total weight of the combination of reagents and preferably of approximately 85% weight citric acid and approximately 15% by weight ascorbic acid based on the total weight of the combination of reagents.

13. A remediation method according to any one of claims 3 to 12, **characterised in that** the concentration of the combination of reagents in the industrial treatment water is from 1 kg/m³ to 6 kg/m³ and preferably from 1 kg/m³ to 3 kg/m³.

14. A remediation method according to any one of claims 3 to 13, **characterised in that** the pH of the industrial treatment water is between 4 and 8 before mixing step b).

15. A method according to any one of claims 3 to 14, **characterised in that** mixing step b) is carried out at an ambient temperature.
